# EUROPÄISCHE PATENTANMELDUNG

(11) **EP 4 647 559 A1**
(43) Veröffentlichungstag der Anmeldung: **12.11.2025**
(21) Anmeldenummer: 25161331.1
(22) Anmeldetag: 03.03.2025
(51) Int. Cl.: E03B 9/02, F16K 37/00

(54) **SENSOREINRICHTUNG UND VERFAHREN ZUM BESTIMMEN EINES ÖFFNUNGSGRADS EINES VENTILS EINER ARMATUR SOWIE ARMATUR**

(30) Priorität: 08.05.2024 DE 102024204334
(71) Anmelder: Düker GmbH, 97753 Karlstadt (DE)
(72) Erfinder: Flentge, Stefan, 60596 Frankfurt am Main (DE)
(74) Vertreter: Ullrich & Naumann PartG mbB

(57) **Zusammenfassung**

Die Erfindung betrifft eine Sensoreinrichtung (4) zum Bestimmen eines Öffnungsgrads eines Ventils (2) einer Armatur (1), insbesondere eines Hydranten, mit zumindest einem Drehratensensor (10), beispielsweise Gyroskop-Sensor, wobei die Armatur (1) eine zwischen einer Geschlossen-Position und einer Offen-Position, um eine Drehachse (9) drehbare Bedieneinrichtung (3), insbesondere umfassend eine drehbare Spindel (7), für das Ventil (2) aufweist, wobei der zumindest eine Drehratensensor (10) in und/oder an der Bedieneinrichtung (3) derart anordenbar ist, dass in einem angeordneten Zustand bei einem Betätigen der Bedieneinrichtung (3) durch Drehen um die Drehachse (9) durch den zumindest einen Drehratensensor (10) zumindest ein Bewegungssignal erfassbar ist, wobei basierend auf dem zumindest einen Bewegungssignal der Öffnungsgrad des Ventils (2) bestimmbar ist. Des Weiteren sind eine Armatur (1) und ein Verfahren zum Bestimmen eines Öffnungsgrads eines Ventils (2) einer Armatur (1) beansprucht.

## Beschreibung

Die Erfindung betrifft eine Sensoreinrichtung zum Bestimmen eines Öffnungsgrads eines Ventils einer Armatur, insbesondere eines Hydranten.

Des Weiteren betrifft die Erfindung eine Armatur, insbesondere Hydrant, mit einem Ventil, einer Bedieneinrichtung für das Ventil und einer solchen Sensoreinrichtung. Zudem hat die vorliegende Erfindung ein Verfahren zum Bestimmen eines Öffnungsgrads eines Ventils einer Armatur insbesondere mit einer solchen Sensoreinrichtung zum Gegenstand.

Hydranten sind meist als Unterflurhydranten, die unterhalb der Erdoberfläche in einer Bodenwanne oder einem Schacht installiert sind, oder als Überflurhydraten, die oberhalb der Erdoberfläche mit einer vertikalen Erstreckung installiert sind, ausgebildet. Im Rahmen der routinemäßigen Wartung solcher Hydranten kann es erforderlich sein den Öffnungsgrad zu überprüfen, um sicherzustellen, dass das Ventil nicht aufgrund einer Fehlfunktion oder sonstiger äußerer Einwirkungen, wie Vandalismus, geöffnet ist. Des Weiteren kann es erforderlich sein, die ordnungsgemäße Funktionsfähigkeit des Ventils zu überprüfen. Denn durch Schmutz, Ablagerungen oder Verstopfungen können die Ventile schwergängig werden oder sogar feststecken. Solche Hydranten weisen jedoch in der Regel keine Einrichtung zur visuellen Bestimmung des Öffnungsgrads, wie beispielsweise Markierungen, auf. Somit ist die Bestimmung des Öffnungsgrads nur schwer möglich.

Zur einfacheren Bestimmung des Öffnungsgrads eines Ventils von Hydranten können Sensoreinrichtungen, die am Hydranten verbaut sind, verwendet werden. Solche Sensoreinrichtungen sind seit Jahren aus der Praxis bekannt. Problematisch ist, dass diese Sensoreinrichtungen aufgrund ihrer hohen Komplexität störungsanfällig sind. Zudem können im Fall einer Reparatur solcher Sensoreinrichtungen hohe Reparaturkosten entstehen.

Der vorliegenden Erfindung liegt daher die Aufgabe zugrunde, eine Sensoreinrichtung der eingangs genannten Art derart auszugestalten und weiterzubilden, dass mit konstruktiv einfachen Mitteln der Öffnungsgrad eines Ventils einer Armatur zuverlässig bestimmt werden kann. Des Weiteren sollen eine Armatur und ein Verfahren zum Bestimmen eines Öffnungsgrads eines Ventils einer Armatur angegeben werden.

Erfindungsgemäß ist die voranstehende Aufgabe durch die Merkmale des Anspruches 1 gelöst. Danach betrifft die Erfindung eine Sensoreinrichtung zum Bestimmen eines Öffnungsgrads eines Ventils einer Armatur, insbesondere eines Hydranten, mit zumindest einem Drehratensensor, beispielsweise Gyroskop-Sensor, wobei die Armatur eine zwischen einer Geschlossen-Position und einer Offen-Position, um eine Drehachse drehbare Bedieneinrichtung, insbesondere umfassend eine drehbare Spindel, für das Ventil aufweist, wobei der zumindest eine Drehratensensor in und/oder an der Bedieneinrichtung derart anordenbar ist, dass in einem angeordneten Zustand bei einem Betätigen der Bedieneinrichtung durch Drehen um die Drehachse durch den zumindest einen Drehratensensor zumindest ein Bewegungssignal erfassbar ist, wobei basierend auf dem zumindest einen Bewegungssignal der Öffnungsgrad des Ventils bestimmbar ist.

Die voranstehende Aufgabe ist des Weiteren durch eine Armatur mit den Merkmalen des nebengeordneten Anspruchs 10 gelöst. Diese Armatur, insbesondere Hydrant, weist ein Ventil, eine Bedieneinrichtung für das Ventil und eine Sensoreinrichtung gemäß einem der Ansprüche 1 bis 9 auf.

Hinsichtlich eines Verfahrens zum Bestimmen eines Öffnungsgrads eines Ventils einer Armatur ist die voranstehende Aufgabe durch die Merkmale des nebengeordneten Anspruchs 11 gelöst. Danach umfasst das in Rede stehende Verfahren zum Bestimmen eines Öffnungsgrads eines Ventils einer Armatur, insbesondere eines Hydranten, mit einer Sensoreinrichtung, insbesondere einer Sensoreinrichtung gemäß einem der Ansprüche 1 bis 9, wobei die Sensoreinrichtung zumindest einen Drehratensensor, beispielsweise Gyroskop-Sensor, umfasst,
wobei die Armatur eine zwischen einer Geschlossen-Position und einer Offen-Position, um eine Drehachse drehbare Bedieneinrichtung, insbesondere umfassend eine drehbare Spindel, für das Ventil aufweist, wobei der zumindest eine Drehratensensor in und/oder an der Bedieneinrichtung angeordnet ist, die Schritte:
- Betätigen der Bedieneinrichtung durch Drehen um die Drehachse;
- Erfassen zumindest eines Bewegungssignals durch den zumindest einen Drehratensensor; und
- Bestimmen des Öffnungsgrads des Ventils basierend auf dem erfassten zumindest einen Bewegungssignal.

In erfindungsgemäßer Weise ist zunächst erkannt worden, dass die voranstehende Aufgabe verblüffend einfach durch die Anordnung zumindest eines Drehratensensors gelöst werden kann. Durch den Drehratensensor ist eine Drehrate bzw. eine Winkelgeschwindigkeit der Spindel erfassbar. Zudem könnte durch den zumindest einen Drehratensensor eine Drehrichtung der Spindel erfassbar sein. In diesem Zusammenhang kann das zumindest eine Bewegungssignal einen oder mehrere Werte der Winkelgeschwindigkeit, insbesondere Winkelgeschwindigkeits-Zeit-Werte in Verbindung mit einer zeitlichen Abfolge, umfassen. Mehrere Winkelgeschwindigkeits-Zeit-Werte können einen Winkelgeschwindigkeits-Zeit-Verlauf bilden. Anhand des Bewegungssignals, vorzugsweise in Form eines Winkelgeschwindigkeits-Zeit-Verlaufs, lässt sich der Öffnungsgrad bestimmen. Mithilfe des zumindest einen Drehratensensors kann somit eine zuverlässige Bestimmung des Öffnungsgrads mit einer hohen Genauigkeit sichergestellt werden. Dabei weist die Sensoreinrichtung eine geringe Komplexität auf.

Der Begriff "Öffnungsgrad" ist im Rahmen der vorliegenden Offenbarung im weitesten Sinn zu verstehen und betrifft das Ausmaß, in dem das Ventil geöffnet ist und es Fluid, wie Flüssigkeit oder Gas, ermöglicht, durch das Fluidsystem zu strömen. Der Öffnungsgrad kann in Form des Verhältnisses eines bestimmten Bewegungswegs, insbesondere eines Öffnungswinkels, der Bedieneinrichtung zu einem bekannten maximalen Bewegungsweg, insbesondere in Form eines maximalen Öffnungswinkels, der Bedieneinrichtung angegeben werden, insbesondere wobei der maximale Bewegungsweg der Offen-Position zugeordnet ist. Der Bewegungsweg kann mit anderen Worten eine bestimmte Position entlang einer Wegstrecke beschreiben. In diesem Zusammenhang kann beispielsweise ein mithilfe der Sensoreinrichtung ermittelter Bewegungsweg der Bedieneinrichtung in Form eines Öffnungswinkels 180° betragen. Bei einem Öffnungswinkel von 180° und einem maximalen Bewegungsweg bzw. Öffnungswinkel von beispielsweise 360°, welcher der Offen-Position des Ventils entsprechen kann, beträgt der daraus ermittelte Öffnungsgrad somit 180°/360° = 50 %. Es wird darauf hingewiesen, dass nicht zwangsweise ein linearer Zusammenhang zwischen dem Öffnungsgrad und dem Volumenstrom bestehen muss.

In vorteilhafter Weise können zumindest ein Magnetfeldsensor, insbesondere Hall-Sensor, und zumindest ein mit dem zumindest einen Magnetfeldsensor interagierender Permanentmagnet vorgesehen sein, wobei der zumindest eine Permanentmagnet in und/oder an einem gegenüber der Bedieneinrichtung unbewegbaren Armaturgehäuse und der zumindest eine Magnetfeldsensor in und/oder an der Bedieneinrichtung anordenbar ist, oder wobei der zumindest eine Magnetfeldsensor in und/oder an dem Armaturgehäuse und der zumindest eine Permanentmagnet in und/oder an der Bedieneinrichtung anordenbar ist, derart, dass in einem angeordneten Zustand bei einem Betätigen der Bedieneinrichtung durch den zumindest einen Magnetfeldsensor zumindest ein Abstandssignal, welches einer Abstandsänderung zwischen dem zumindest einen Permanentmagnet und einem des zumindest einen Magnetfeldsensors zuordenbar ist, erfassbar ist, wobei basierend auf dem zumindest einen Abstandssignal der bestimmte Öffnungsgrad überprüfbar und ggf. korrigierbar ist. Dies ermöglicht es, etwaige Messungenauigkeiten, die bei der Messung durch den zumindest einen Drehratensensor auftreten können, im Rahmen der Bestimmung des Öffnungsgrads zu berücksichtigen. Solche Messungenauigkeiten können beispielsweise temperaturbedingte Messwertverschiebungen (Offset) umfassen. Anhand des zumindest einen Abstandssignals kann in diesem Zusammenhang der Öffnungsgrad bestimmt werden und zur Überprüfung bzw. Korrektur des auf Basis des zumindest einen Bewegungssignals bestimmten Öffnungsgrads herangezogen werden. Es ist zudem denkbar, dass anhand des zumindest einen Abstandssignals eine Anzahl von Umdrehungen der Bedieneinrichtung ermittelbar ist. Dies ist besonders vorteilhaft bei einem zu ermittelnden Bewegungsweg bzw. Öffnungswinkel von mehr als 360°. Die Anzahl von Umdrehungen ist einfach ermittelbar und kann zur Überprüfung bzw. Korrektur des auf Basis des zumindest einen Bewegungssignals bestimmten Öffnungsgrads herangezogen werden.

Durch das Betätigen der Bedieneinrichtung ändert sich eine relative Position des zumindest einen Permanentmagnets und des zumindest einen Magnetfeldsensors zueinander. Der zumindest eine Magnetfeldsensor kann dabei kontinuierlich über die Zeit Signalwerte des zumindest einen Abstandssignals erfassen, die proportional zu einer Magnetfeldstärke des zumindest einen Permanentmagnets sind. Die Signalwerte können einer messbaren Spannungsdifferenz in einem stromdurchflossenen Leiter, welcher sich in einem Magnetfeld befindet, zugeordnet sein. Der Betrag des erfassten Signalwerts bzw. der Magnetfeldstärke ist umso höher, je geringer der Abstand des zumindest einen Permanentmagnets zu dem zumindest einen Magnetfeldsensor ist. Somit sind kontinuierlich Signalwerte des zumindest einen Abstandssignals erfassbar, wobei auf Grundlage der Signalwerte Positionen des zumindest einen Permanentmagnets und des zumindest einen Magnetfeldsensors zueinander ermittelbar sind, die einem maximalen Abstand, einem minimalen Abstand oder einem zwischen dem minimalen und dem maximalen Abstand liegenden Abstand zugeordnet werden können.

Zudem ist denkbar, dass der Öffnungsgrad des Ventils basierend auf dem zumindest einen Abstandssignal ausgehend von einer initialen Geschlossen-Position oder einer initialen Offen-Position des Ventils nach dem Bedienen der Bedieneinrichtung bestimmbar ist. Anhand des zumindest einen Abstandssignals kann des Weiteren zumindest ein dem minimalen Abstand zugeordnetes Annäherungsereignis bestimmbar sein, wobei basierend auf dem zumindest einen Annäherungsereignis der Öffnungsgrad des Ventils bestimmbar ist.

In dem Fall, in dem der zumindest eine Permanentmagnet in und/oder an dem Armaturgehäuse und der zumindest eine Magnetfeldsensor in und/oder an der Bedieneinrichtung angeordnet ist, wird der zumindest eine Magnetfeldsensor beim Betätigen der Bedieneinrichtung entlang eines Pfads bewegt. Somit ist auf Grundlage des Abstandssignals die Position des zumindest einen Magnetfeldsensors auf dem Pfad ermittelbar. Bei einer solchen Anordnung kann die Sensoreinrichtung besonders einfach bei bestehenden Armaturen nachgerüstet werden. Dazu kann die Bedieneinrichtung ausgebaut werden und sodann der zumindest eine Magnetfeldsensor einschließlich etwaiger Leitungskabel in und/oder an der nun einfach zugänglichen Bedieneinrichtung verbaut werden. Der zumindest eine Permanentmagnet kann mit geringem Aufwand in und/oder an dem Armaturgehäuse festgelegt werden.

In dem Fall, in dem der zumindest eine Magnetfeldsensor in und/oder an dem Armaturgehäuse und der zumindest eine Permanentmagnet in und/oder an der Bedieneinrichtung anordenbar ist, wird der zumindest eine Permanentmagnet beim Betätigen der Bedieneinrichtung entlang eines Pfads bewegt. Somit ist auf Grundlage des zumindest einen Abstandssignals die Position des zumindest einen Permanentmagnets auf dem Pfad ermittelbar. Bei einer solchen Anordnung ist vorteilhaft, dass dem zumindest einen Magnetfeldsensor zugeordnete Leitungskabel während des Betätigens der Bedieneinrichtung stationär am Armaturgehäuse angeordnet sein können. Dadurch kann die Wahrscheinlichkeit von Beschädigungen an der Sensoreinrichtung infolge von Bewegungen der Bedieneinrichtung reduziert werden.

Es wird darauf hingewiesen, dass der zumindest eine Permanentmagnet und/oder an der zumindest eine Magnetfeldsensor mittel- oder unmittelbar an der Bedieneinrichtung und/oder dem Armaturgehäuse anordenbar sind.

In vorteilhafter Weise kann zumindest ein an der Armatur, insbesondere der Bedieneinrichtung, anordenbarer Beschleunigungssensor zum Erfassen eines Neigungswinkels der Armatur vorgesehen sein, vorzugsweise wobei durch den zumindest einen Beschleunigungssensor im angeordneten Zustand eine Beschleunigung in zumindest einer Richtung erfassbar ist. Dadurch ist ein Neigungswinkel der Armatur gegenüber der Vertikalen bzw. der Horizontalen erfassbar, sodass eine Beschädigung der Armatur, beispielsweise infolge eines Fahrzeuganpralls oder dergleichen, erkannt werden kann.

In weiter vorteilhafter Weise kann eine in und/oder an der Armatur anordenbare Auswerteeinrichtung, insbesondere zum Verarbeiten von Signalen des zumindest einen Drehratensensors und/oder des zumindest einen Magnetfeldsensors und/oder des zumindest einen Beschleunigungssensors, vorgesehen sein. Die Auswerteeinrichtung kann unabhängig von dem zumindest einen Drehratensensor unter Berücksichtigung des geringen zur Verfügung stehenden Platzes positioniert werden, wodurch die Flexibilität bei der Systemgestaltung und Installation erhöht werden kann.

Gemäß einer vorteilhaften Weiterbildung kann der zumindest eine Drehratensensor und/oder der zumindest eine Magnetfeldsensor und/oder der zumindest eine Permanentmagnet und/oder die Auswerteeinrichtung und/oder der zumindest eine Beschleunigungssensor als eine zusammengefügte, insbesondere ringförmige, Elektronikeinrichtung mit einem Trägerelement ausgebildet sein. Einer der dadurch erzielten Vorteile ist, dass die Sensoreinrichtung, insbesondere bei einem Nachrüsten, einfach und schnell in und/oder an der Armatur festlegbar ist.

Es ist denkbar, dass zumindest ein Teil der Komponenten der Elektronikeinrichtung durch eine stoffschlüssige Verbindung, insbesondere eine Kleb-, Löt- oder Schweißverbindung, und/oder eine form- und/oder kraftschlüssige Verbindung, insbesondere eine geschraubte und/oder geklemmte Verbindung, an und/oder in dem Trägerelement festgelegt sind. Dies ermöglicht eine besonders einfache und schnelle Montage. Klebverbindungen zeichnen sich darüber hinaus durch gute Dämpfungseigenschaften aus, wodurch ein zuverlässiger Betrieb der Sensoren sichergestellt werden kann. Die geschraubte Verbindung kann beispielweise zumindest eine an dem Armaturgehäuse oder der Bedieneinrichtung anordenbare bauraumsparende Madenschraube umfassen. Durch eine geschraubte und/oder geklemmte Verbindung ist der Teil der Elektronikkomponenten von dem Trägerelement lösbar, sodass Reparaturen einfach durchgeführt werden können.

Alternativ oder zusätzlich ist denkbar, dass das Trägerelement durch eine stoffschlüssige Verbindung, insbesondere eine Kleb-, Löt- oder Schweißverbindung, an und/oder in der Bedieneinrichtung festlegbar ist. Dies ermöglicht ebenfalls eine besonders einfache und schnelle Montage. Klebverbindungen zeichnen sich darüber hinaus durch gute Dämpfungseigenschaften aus, wodurch ein zuverlässiger Betrieb der Sensoren sichergestellt werden kann.

Des Weiteren kann das Trägerelement durch eine form- und/oder kraftschlüssige Verbindung, insbesondere eine geschraubte und/oder geklemmte Verbindung oder eine Schrumpfverbindung, an und/oder in der Bedieneinrichtung festlegbar sein. Die geschraubte Verbindung kann beispielweise zumindest eine an dem Armaturgehäuse oder der Bedieneinrichtung anordenbare bauraumsparende Madenschraube umfassen. Durch eine geschraubte und/oder geklemmte Verbindung ist das Trägerelement bzw. sind die daran angeordneten Komponenten der Elektronikeinrichtung von der Bedieneinrichtung lösbar, sodass Reparaturen einfach durchgeführt werden können. Eine Schrumpfverbindung ermöglicht eine besonders schnelle Montage des Trägerelements.

Des Weiteren ist denkbar, dass der zumindest eine Magnetfeldsensor als 3D-Magnetfeldsensor ausgebildet ist. Durch einen 3D-Magnetfeldsensor ist das Magnetfeld des zumindest einen Permanentmagneten in drei Dimensionen erfassbar. Somit ist eine präzisere Lokalisierung und Charakterisierung des Magnetfelds und in diesem Zusammenhang eine präzisere Überprüfung bzw. Korrektur des Öffnungsgrads möglich.

Es kann vorteilhaft sein, dass der zumindest eine Magnetfeldsensor bezogen auf die Drehachse exzentrisch anordenbar ist, insbesondere wobei der zumindest eine Magnetfeldsensor ausgebildet ist, eine in einer Bewegungsebene des zumindest einen Magnetfeldsensors liegende X- und Y-Komponente des Magnetfelds zu erfassen. Bei einer exzentrischen Anordnung kann das durch den zumindest einen Magnetfeldsensor erfasste zumindest eine Abstandssignal besonders zuverlässig einer Abstandsänderung zugeordnet werden. Dies ist darauf zurückzuführen, dass die Signalwerte, die mit dem Abstand zwischen dem Permanentmagnet und dem zumindest einen Magnetfeldsensor korrelieren, während der Betätigung der Bedieneinrichtung, verglichen mit den während der Messung auftretenden Messungenauigkeiten, großen Änderungen unterliegen. Durch die Erfassung der X- und Y-Komponente kann eine besonders recheneffiziente Sensoreinrichtung bereitgestellt werden. Da der zumindest eine Magnetfeldsensor exzentrisch in und/oder an der Bedieneinrichtung angeordnet ist, erfährt dieser während der Drehung der Spindel sowohl eine Translations- als auch eine Rotationsbewegung. Durch die Rotationsbewegung ändert sich die durch den zumindest einen Magnetfeldsensor erfasste X- und Y-Komponente. Basierend auf der erfassten X- und Y-Komponente lässt sich somit auf einfache Weise ein Ausrichtungsvektor bzw., in Verbindung mit einem bekannten Pfad des zumindest einen Magnetfeldsensors, eine Position des zumindest einen Magnetfeldsensors gegenüber dem zumindest einen Permanentmagnet bestimmen. Der Ausrichtungsvektor bzw. die Position kann wiederum zur Überprüfung bzw. Korrektur des Öffnungsgrads herangezogen werden.

In weiter vorteilhafter Weise kann der zumindest eine Drehratensensor ausgebildet sein, bei einem Nicht-Betätigen der Bedieneinrichtung inaktiv zu sein. Dadurch kann eine Sensoreinrichtung mit einem geringen Energieverbrauch bereitgestellt werden. Zur Reduzierung des Energieverbrauchs kann es ferner zweckmäßig sein, dass der zumindest eine Drehratensensor und/oder der zumindest eine Beschleunigungssensor und/oder der Magnetfeldsensor dazu ausgebildet sind, sich bei Erfassen eines Signalwerts ober- oder unterhalb eines definierbaren Schwellsignalwerts von einem Ruhezustand in einen Aktivzustand zu versetzen und vorzugsweise ein nachfolgend erfasstes Signal, insbesondere Bewegungssignal, an die Auswerteeinrichtung zu übermitteln.

Gemäß einer vorteilhaften Weiterbildung kann die Auswerteeinrichtung eine Batterie zur Energieversorgung aufweisen. Dadurch kann auf eine aufwendige kabelgebundene Stromversorgung verzichtet werden.

Die Auswerteeinrichtung kann ein Kommunikationsmittel, beispielsweise basierend auf NFC, Bluetooth, RFID oder dergleichen, aufweisen. Dabei kann das Kommunikationsmittel prinzipiell ausgebildet sein, mit dem zumindest einen Magnetfeldsensor über physische Leitungen und/oder eine drahtlose Verbindung zu kommunizieren. Darüber hinaus ist denkbar, dass das Kommunikationsmittel ausgebildet ist, über physische Leitungen und/oder eine drahtlose Verbindung mit einem in der Nähe der Sensoreinrichtung befindlichen externen Bediengerät eines Benutzers zu kommunizieren. Mithilfe von NFC, Bluetooth, RFID kann eine drahtlose Verbindung mit einem niedrigen Energieverbrauch bereitgestellt werden. Zudem ist denkbar, dass das Kommunikationsmittel ausgebildet ist, mit einem externen zentralen Überwachungssystem zu kommunizieren.

Im Hinblick auf eine besonders einfache Konstruktion der Sensoreinrichtung können der zumindest eine Drehratensensor und/oder der zumindest eine Magnetfeldsensor und/oder der zumindest eine Permanentmagnet und/oder der zumindest eine Beschleunigungssensor auf einer gleichen Höhe oder auf unterschiedlichen Höhen, insbesondere in Richtung einer Erstreckungsrichtung der Spindel zueinander beabstandet, anordenbar sein. Der zumindest eine Permanentmagnet kann dabei vorzugsweise ober- oder unterhalb des zumindest einen Magnetfeldsensors anordenbar sein, vorzugsweise derart, dass eine durch einen Nordpol und einen Südpol gebildete Magnetachse des zumindest einen Permanentmagnets parallel zu der Erstreckungsrichtung der Spindel verläuft. Insbesondere könnte dabei der zumindest eine Permanentmagnet an einem im und/oder am Armaturgehäuse festlegbaren Deckelelement anordenbar bzw. angeordnet sein. Zusätzlich könnte das Deckelelement dazu ausgebildet sein, einen wasserführenden Bereich des Hydranten gegenüber einem nicht wasserführenden Bereich des Hydranten abzudichten. Alternativ oder zusätzlich könnte das Deckelelement eine Durchführung für eine Spindel der Bedieneinrichtung aufweisen, vorzugsweise wobei die Spindel in dem Deckelelement gelagert ist.

**In** vorteilhafter Weise kann beim Bestimmen des Öffnungsgrads basierend auf dem zumindest einen erfassten Bewegungssignal ein Winkelgeschwindigkeits-Zeit-Verlauf bestimmt werden, wobei basierend auf dem Winkelgeschwindigkeits-Zeit-Verlauf zumindest ein Positions-Zeit-Wert der Bedieneinrichtung bestimmt wird, wobei basierend auf dem zumindest einen Positions-Zeit-Wert und einem bekannten initialen Positions-Zeit-Wert ein mit dem Öffnungsgrad korrespondierender Bewegungsweg und/oder eine mit dem Öffnungsgrad korrespondierende Bewegungsrichtung der Bedieneinrichtung bestimmt werden, insbesondere wobei der initiale Positions-Zeit-Wert der Geschlossen- oder der Offen-Position zugeordnet ist. Somit kann mit einem geringen Rechen- und Speicheraufwand der Öffnungsgrad bestimmt werden.

In vorteilhafter Weise kann die Sensoreinrichtung zur Berücksichtigung etwaiger Messungenauigkeiten zumindest einen Magnetfeldsensor und zumindest einen mit dem zumindest einen Magnetfeldsensor interagierenden Permanentmagnet umfassen, wobei der zumindest eine Permanentmagnet in und/oder an einem gegenüber der Bedieneinrichtung unbewegbaren Armaturgehäuse und der zumindest eine Magnetfeldsensor in und/oder an der Bedieneinrichtung angeordnet ist, oder wobei der zumindest eine Magnetfeldsensor in und/oder an dem Armaturgehäuse und der zumindest eine Permanentmagnet in und/oder an der Bedieneinrichtung angeordnet ist, und kann das Verfahren zum Einrichten der Sensoreinrichtung die weiteren Schritte umfassen:
- Erfassen zumindest eines Abstandssignals, welches einer Abstandsänderung zwischen dem zumindest einen Permanentmagnet und einem des zumindest einen Magnetfeldsensors zuordenbar ist, durch den zumindest einen Magnetfeldsensor; und
- Überprüfen und ggf. Korrigieren des Öffnungsgrads des Ventils basierend auf dem erfassten zumindest einen Abstandssignal.

Des Weiteren ist denkbar, dass durch einen an der Armatur, insbesondere der Bedieneinrichtung, angeordneten zumindest einen Beschleunigungssensor ein aktueller Beschleunigungsvektor ermittelt wird und dass basierend auf einem bekannten initialen Beschleunigungsvektor und dem aktuellen Beschleunigungsvektor ein aktueller Neigungswinkel der Armatur bestimmt wird. Anhand des Neigungswinkels der Armatur gegenüber der Vertikalen bzw. der Horizontalen kann eine Beschädigung der Armatur, beispielsweise infolge eines Fahrzeuganpralls oder dergleichen, erkannt werden.

Zur verbesserten Erfassung des Öffnungsgrads durch den Benutzer kann der Öffnungsgrad aus dem Verhältnis des bestimmten Bewegungswegs, insbesondere in Form eines Öffnungswinkels, zu einem bekannten maximalen Bewegungsweg, insbesondere in Form eines maximalen Öffnungswinkels, berechnet werden, insbesondere wobei der maximale Bewegungsweg der Offen-Position zugeordnet ist.

Die hier beschriebene Offenbarung betrifft zusätzlich ein Verfahren zum Einrichten der Sensoreinrichtung gemäß einem der Ansprüche 1 bis 9, insbesondere bei einer Erstinbetriebnahme, umfassend die Schritte:
- Bereitstellen der Offen-Position des Ventils mithilfe der Bedieneinrichtung; und
- Ermitteln eines maximalen Bewegungswegs der Bedieneinrichtung durch Referenzieren der Offen-Position auf einen ersten aktuellen Bewegungsweg der Bedieneinrichtung.

In vorteilhafter Weise kann das Verfahren zum Einrichten der Sensoreinrichtung die weiteren, insbesondere zeitlich vorhergehenden, Schritte umfassen:
- Bereitstellen der Geschlossen-Position des Ventils mithilfe der Bedieneinrichtung; und
- Ermitteln eines minimalen Bewegungswegs der Bedieneinrichtung durch Referenzieren der Geschlossen-Position auf einen zweiten aktuellen Bewegungsweg der Bedieneinrichtung.

In Bezug auf die Bedieneinrichtung mit der Spindel wird mit anderen Worten ein maximaler Öffnungswinkel in dem vollständig geöffneten Zustand der Bedieneinrichtung und/oder ein minimaler Öffnungswinkel in dem vollständig geschlossenen Zustand der Bedieneinrichtung als Referenz gespeichert. Zum nachfolgenden Bestimmen des Öffnungsgrads wird beispielsweise zunächst ein aktueller Öffnungswinkel anhand des zumindest einen erfassten Bewegungssignals und eines initialen Öffnungswinkels, beispielsweise des minimalen Öffnungswinkels (Geschlossen-Position), ermittelt. Der Öffnungsgrad ergibt sich dann aus dem Verhältnis des aktuellen Öffnungswinkels zu dem maximalen Öffnungswinkel.

In weiter vorteilhafter Weise kann das Verfahren zum Einrichten der Sensoreinrichtung durch ein externes Bediengerät, beispielswiese ein Smartphone, über eine Drahtlosverbindung mit der Auswerteeinrichtung initialisiert werden. Vorzugsweise basiert die Kommunikation zwischen dem Bediengerät und der Auswerteeinrichtung auf NFC. Dabei ist denkbar, dass das Referenzieren der Offen-Position und/oder der Geschlossen-Position mithilfe des externen Bediengeräts gesteuert wird.

Es ist zudem denkbar, dass Messungenauigkeiten, insbesondere temperaturbedingte Messwertverschiebungen, erfasst werden. Somit können etwaige erfasste Messungenauigkeiten direkt bei einer nachfolgenden Bestimmung des Öffnungsgrads berücksichtigt werden.

Des Weiteren kann das Verfahren zum Einrichten der Sensoreinrichtung ein Ermitteln zumindest eines initialen Beschleunigungsvektors durch den zumindest einen Beschleunigungssensor und ein Referenzieren des zumindest einen initialen Beschleunigungsvektors auf zumindest einen initialen Neigungswinkel umfassen. Dabei ist denkbar, dass das Referenzieren des zumindest einen initialen Beschleunigungsvektors mithilfe des externen Bediengeräts erfolgt.

Zudem kann das Verfahren zum Einrichten der Sensoreinrichtung die folgenden weiteren Schritte zum Kalibieren des zumindest einen Magnetfeldsensors umfassen:
- Drehen der Spindel um mindestens eine Umdrehung;
- Erfassen eines minimalen und eines maximalen Signalwerts durch den zumindest einen Magnetfeldsensor;
- Signalisieren der mindestens einen Umdrehung, vorzugsweise durch das externe Bediengerät; und
- Speichern von Signalschwellwerten basierend auf dem minimalen und dem maximalen Signalwert.

Die erfindungsgemäße Sensoreinrichtung und die erfindungsgemäße Armatur kann verfahrensgemäß geprägte Merkmale aufweisen, so dass das erfindungsgemäße Verfahren die in den Ansprüchen, der voranstehenden allgemeinen Beschreibung sowie der nachstehenden Figurenbeschreibung enthaltenen Merkmale und die damit erreichten Vorteile der erfindungsgemäßen Sensoreinrichtung und der erfindungsgemäßen Armatur aufweisen kann.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 11 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in schematischer, geschnittener Darstellung ein Ausführungsbeispiel einer erfindungsgemäßen Armatur mit einer erfindungsgemäßen Sensoreinrichtung in einer Seitenansicht,
- Fig. 2: in schematischer, geschnittener Darstellung das Ausführungsbeispiel der erfindungsgemäßen Sensoreinrichtung gemäß Fig. 1 im angeordneten Zustand in einer Seitenansicht,
- Fig. 3: in schematischer, geschnittener Darstellung das Ausführungsbeispiel der erfindungsgemäßen Sensoreinrichtung gemäß Fig. 1 im angeordneten Zustand in einer Draufsicht,
- Fig. 4a, 4b: in schematischer Darstellung Teile des Ausführungsbeispiels der erfindungsgemäßen Sensoreinrichtung gemäß Fig. 1 im angeordneten Zustand in einer Draufsicht vor und nach einer Drehung der Spindel im Uhrzeigersinn, und
- Fig. 5: Schritte eines Ausführungsbeispiels eines erfindungsgemäßen Verfahrens der vorliegenden Erfindung.

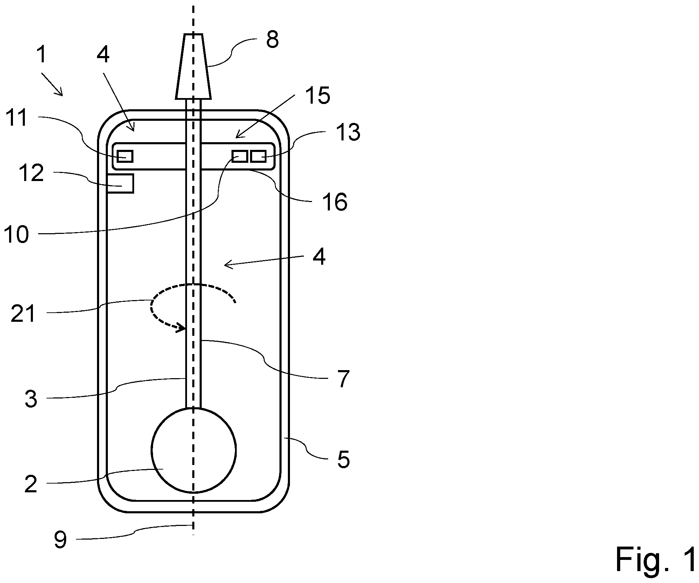

Fig. 1 zeigt in schematischer, geschnittener Darstellung ein Ausführungsbeispiel einer erfindungsgemäßen Armatur mit einer erfindungsgemäßen Sensoreinrichtung in einer Seitenansicht.

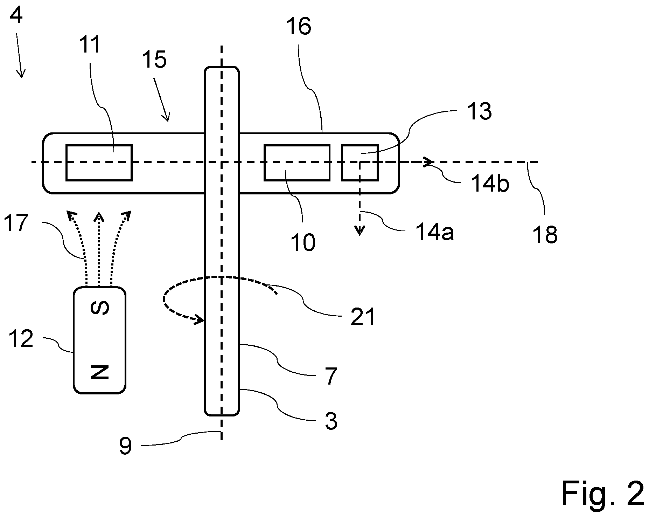

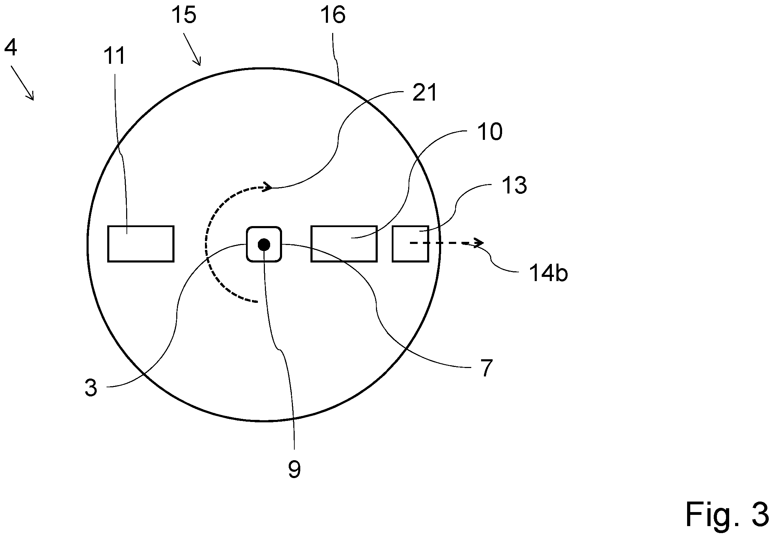

Fig. 2 und 3 zeigen in schematischer, geschnittener Darstellung das Ausführungsbeispiel der erfindungsgemäßen Sensoreinrichtung gemäß Fig. 1 im angeordneten Zustand in einer Seitenansicht und einer Draufsicht.

In Fig. 1 ist eine Armatur 1 in Form eines Überflurhydraten mit einem Ventil 2, einer Bedieneinrichtung 3 für das Ventil 2 und einer Sensoreinrichtung 4 dargestellt. Die Bedieneinrichtung 3 ist gegenüber einem Armaturgehäuse 5 zwischen einer Geschlossen-Position und einer Offen-Position bewegbar. Dazu umfasst die Bedieneinrichtung 3 als Teil einer Innengarnitur 6 eine Spindel 7, die an einem oberen Ende eine Mehrkantaufnahme 8 zum Ansetzen eines Werkzeugs aufweist. Die Bedieneinrichtung 3 ist somit durch ein Drehen der Spindel 7 um eine Drehachse 9 betätigbar.

Die Sensoreinrichtung 4 weist einen Drehratensensor 10 in Form eines Gyroskop-Sensors, einen Magnetfeldsensor 11 und einen mit dem Magnetfeldsensor 11 interagierenden Permanentmagnet 12 auf. Dabei sind der Permanentmagnet 12 an dem Armaturgehäuse 5 und der Drehratensensor 10 sowie der Magnetfeldsensor 11 an der Bedieneinrichtung 3 angeordnet. Der Permanentmagnet 12 weist einen Nordpol (N) und einen Südpol (S) auf, wobei der Südpol (S) den an der Bedieneinrichtung 3 angeordneten Komponenten der Sensoreinrichtung 4 zugewandt ist (siehe Fig. 2 und 3). Alternativ ist denkbar, dass der Nordpol (N) den an der Bedieneinrichtung 3 angeordneten Komponenten der Sensoreinrichtung 4 zugewandt ist. Es wird darauf hingewiesen, dass der Magnetfeldsensor 11 und der Permanentmagnet 12 nicht zwingend zur Bestimmung des Öffnungsgrads vorgesehen sein müssen. Die Anordnung von zumindest einem Drehratensensor ist zur Bestimmung des Öffnungsgrads ausreichend.

Des Weiteren umfasst die Sensoreinrichtung 4 einen an der Bedieneinrichtung 3 angeordneten Beschleunigungssensor 13 zum Erfassen eines Neigungswinkels der Armatur 1, wobei durch den Beschleunigungssensor 13 eine Beschleunigung in zwei senkrecht zueinander liegenden Richtungen 14a, 14b erfassbar ist. Anhand der den Richtungen 14a, 14b zugeordneten Beschleunigungskomponenten kann der Neigungswinkel gegenüber der Vertikalen bzw. der Horizontalen bestimmt werden. Eine hier nicht dargestellte Auswerteeinrichtung zum Verarbeiten von Signalen des Drehratensensors 10, des Magnetfeldsensors 11 und des Beschleunigungssensors 13 ist an der Bedieneinrichtung 3 angeordnet.

Der Drehratensensors 10, der Magnetfeldsensor 11 und der Beschleunigungssensor 13 sind auf einer gleichen Höhe angeordnet (siehe Fig. 2). Dagegen ist der Permanentmagnet 12 in Richtung einer Erstreckungsrichtung der Spindel 7 unter dem Magnetfeldsensor 11 beabstandet angeordnet. Der Permanentmagnet 12 ist dabei derart unterhalb des Magnetfeldsensors 11 angeordnet, dass eine durch den Nordpol (N) und einen Südpol (S) gebildete Magnetachse des Permanentmagnets 12 parallel zu der Erstreckungsrichtung der Spindel 7 verläuft.

Wie aus Fig. 3 ersichtlich ist, sind der Drehratensensor 10, der Magnetfeldsensor 11 und der Beschleunigungssensor 13 als eine zusammengefügte, ringförmige Elektronikeinrichtung 15 mit einem Trägerelement 16 ausgebildet. Der Magnetfeldsensor 11 ist bezogen auf die Drehachse 9 exzentrisch angeordnet.

Das Trägerelement 16 ist um die Spindel 7 der Bedieneinrichtung 3 angeordnet, sodass ein Drehen der Spindel 7 in einem Drehen des Trägerelements 16 um die Drehachse 9 resultiert. Während des Drehens ist durch den Drehratensensor 10 zumindest ein Bewegungssignal erfassbar. Basierend auf diesem Bewegungssignal ist der Öffnungsgrad des Ventils bestimmbar. Während des Drehens wird zudem der Magnetfeldsensor 11 an dem Permanentmagnet 12 vorbeigeführt, wobei der Magnetfeldsensor 11 das Magnetfeld 17 des Permanentmagnets 12 erfassen kann. Durch den Magnetfeldsensor 11 ist dabei ein Abstandssignal erfassbar, welches einer Abstandsänderung zwischen dem Permanentmagnet 12 und dem Magnetfeldsensor 11 zuordenbar ist. Basierend auf dem Abstandssignal kann der Öffnungsgrad des Ventils 2 überprüft bzw. korrigiert werden.

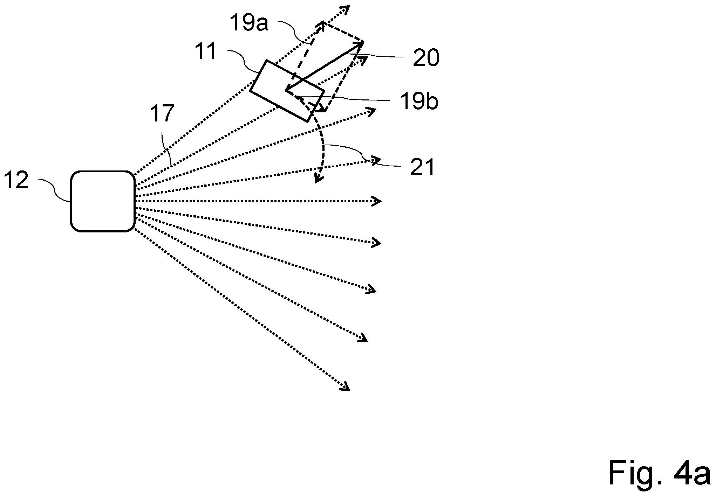

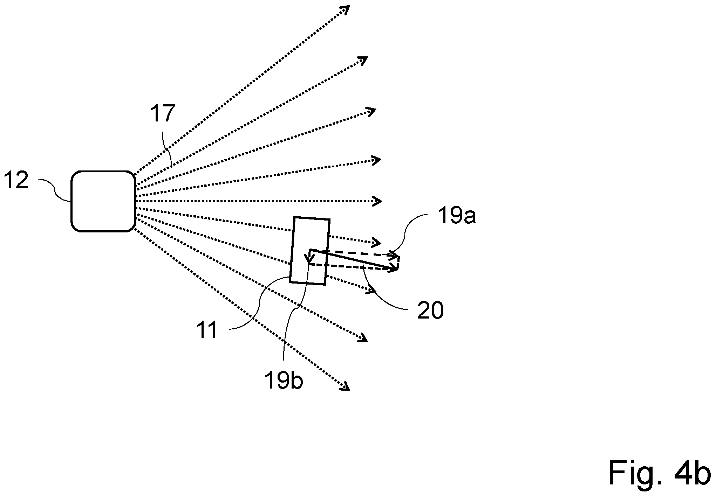

Fig. 4a und 4b zeigen in schematischer Darstellung Teile des Ausführungsbeispiels der erfindungsgemäßen Sensoreinrichtung gemäß Fig. 1 im angeordneten Zustand in einer Draufsicht vor und nach einer Drehung der Spindel im Uhrzeigersinn.

Darin ist jeweils ein Teil des dem Permanentmagnet 12 zugeordneten Magnetfelds 17 sowie der Magnetfeldsensor 11 dargestellt, der mit dem Permanentmagnet 12 bzw. mit dem Magnetfeld 17 interagiert. Der Magnetfeldsensor 11 ist ausgebildet, eine in einer Bewegungsebene 18 (siehe Fig. 2) des Magnetfeldsensors 11 liegende X- und Y-Komponente 19a, 19b des Magnetfelds 17 zu erfassen. Da der Magnetfeldsensor 11 exzentrisch angeordnet ist, erfährt dieser während der Drehung der Spindel sowohl eine Translations- als auch eine Rotationsbewegung. Wie aus den Fig. 4a und 4b ersichtlich ist, ändert sich die durch den Magnetfeldsensor 11 erfasste X- und Y-Komponente 19a, 19b durch die Rotationsbewegung. Basierend auf den erfassten X- und Y-Komponenten 19a, 19b lässt sich ein Ausrichtungsvektor 20 bzw., in Verbindung mit einem bekannten Pfad des Magnetfeldsensors 11, eine Position des Magnetfeldsensors 11 gegenüber dem Permanentmagnet 12 vor und nach der Drehung bestimmen. Der Ausrichtungsvektor 20 bzw. die Position kann wiederum zur Überprüfung bzw. Korrektur des Öffnungsgrads herangezogen werden.

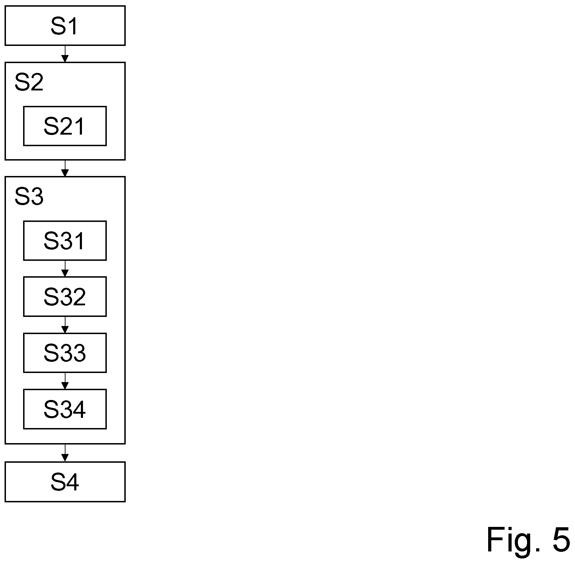

Fig. 5 zeigt Schritte eines Ausführungsbeispiels eines erfindungsgemäßen Verfahrens der vorliegenden Erfindung.

Die Verfahrensschritte werden nachfolgend in Bezug auf die in den Fig. 1 bis 4b dargestellte Armatur 1 umfassend eine Bedieneinrichtung 3 mit einer Spindel 7 und eine Sensoreinrichtung 4 mit einem Drehratensensor 10 und einem Magnetfeldsensor 11 erläutert.

In einem ersten Schritt S1 wird die Bedieneinrichtung 3 durch Drehen der Spindel 7 in einer Drehrichtung 21 ausgehend von einem initialen Öffnungswinkel, beispielsweise einem der Geschlossen-Position zugeordneten minimalen Öffnungswinkel, betätigt. Der minimale Öffnungswinkel kann im Rahmen eines Einrichtens der Sensoreinrichtung 4 zu 0° festgelegt worden sein.

Während des Drehens und eine bestimmte Zeit nach dem Drehen wird in Schritt S2 ein Bewegungssignal durch den Drehratensensor 10 erfasst. Dabei versetzt sich der Drehratensensor 10 bei Erfassen des ersten Bewegungssignals, welches einen Signalwert oberhalb eines definierbaren Schwellsignalwerts umfasst, von einem Ruhezustand in einen Aktivzustand (S21).

In Schritt S3 wird der Öffnungsgrad des Ventils 2 basierend auf dem erfassten Bewegungssignal bestimmt. Im Rahmen dieses Schrittes wird basierend auf dem erfassten Bewegungssignal ein Winkelgeschwindigkeits-Zeit-Verlauf bestimmt (S31). Dieser Winkelgeschwindigkeits-Zeit-Verlauf ist der Rotationsbewegung der Spindel 7 zugeordnet. Anhand des Winkelgeschwindigkeits-Zeit-Verlaufs werden in Schritt S32 anschließend Positions-Zeit-Werte der Bedieneinrichtung 3 bestimmt, wobei basierend auf den Positions-Zeit-Werten und einem bekannten initialen Positions-Zeit-Wert ein mit dem Öffnungsgrad korrespondierender Öffnungswinkel und eine mit dem Öffnungsgrad korrespondierende Öffnungsrichtung bzw. Drehrichtung der Bedieneinrichtung bestimmt werden (Schritt S33). Dabei ist der initiale Positions-Zeit-Wert der Geschlossen-Position zugeordnet. Der Öffnungswinkel kann dabei aus einem bekannten initialen Öffnungswinkel von 0°, der der Geschlossen-Position entspricht, addiert mit einem Winkel von beispielsweise 50° zu 50° bestimmt werden. Der Winkel von 50° bestimmt sich aus dem während der Drehung der Spindel 7 erfassten Winkelgeschwindigkeits-Zeit-Verlauf.

Anhand des bestimmten Öffnungswinkels und der bestimmten Öffnungsrichtung wird unter Bezugnahme eines maximalen Öffnungswinkels der Öffnungsgrad bestimmt (S34).

Basierend auf den durch den Drehratensensor 10 nach dem Drehen, als während des Stillstands der Spindel 7, erfassten Signalwerten kann eine kontinuierlich während der Messung aufgetretene temperaturbedingte Messwertverschiebung erfasst werden. Anhand der erfassten Messwertverschiebung kann anschließend eine Korrektur des Winkelgeschwindigkeits-Zeit-Verlaufs bzw. des zuvor bestimmten Öffnungsgrads durchgeführt werden (Schritt S4).

Hinsichtlich weiterer vorteilhafter Ausgestaltungen der erfindungsgemäßen Sensoreinrichtung, der erfindungsgemäßen Armatur und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Sensoreinrichtung, der erfindungsgemäßen Armatur und des erfindungsgemäßen Verfahrens lediglich zur Erörterung der beanspruchten Lehre dienen, diese jedoch nicht auf die Ausführungsbeispiele einschränken.

### Bezugszeichenliste

- 1: Armatur
- 2: Ventil
- 3: Bedieneinrichtung
- 4: Sensoreinrichtung
- 5: Armaturgehäuse
- 6: Innengarnitur
- 7: Spindel
- 8: Mehrkantaufnahme
- 9: Drehachse
- 10: Drehratensensor
- 11: Magnetfeldsensor
- 12: Permanentmagnet
- 13: Beschleunigungssensor
- 14a, 14b: Richtung der Beschleunigung
- 15: Elektronikeinrichtung
- 16: Trägerelement
- 17: Magnetfeld
- 18: Bewegungsebene
- 19a, 19b: X- und Y-Komponente des Magnetfelds
- 20: Ausrichtungsvektor
- 21: Drehrichtung
- N: Nordpol des Permanentmagnets
- S: Südpol des Permanentmagnets
- S1, S2, S21, S3, S31, S32, S33, S34, S4: Schritte des Verfahrens

## Patentansprüche

1. Sensoreinrichtung (4) zum Bestimmen eines Öffnungsgrads eines Ventils (2) einer Armatur (1), insbesondere eines Hydranten, mit zumindest einem Drehratensensor (10), beispielsweise Gyroskop-Sensor,
wobei die Armatur (1) eine zwischen einer Geschlossen-Position und einer Offen-Position, um eine Drehachse (9) drehbare Bedieneinrichtung (3), insbesondere umfassend eine drehbare Spindel (7), für das Ventil (2) aufweist,
wobei der zumindest eine Drehratensensor (10) in und/oder an der Bedieneinrichtung (3) derart anordenbar ist,
dass in einem angeordneten Zustand bei einem Betätigen der Bedieneinrichtung (3) durch Drehen um die Drehachse (9) durch den zumindest einen Drehratensensor (10) zumindest ein Bewegungssignal erfassbar ist,
wobei basierend auf dem zumindest einen Bewegungssignal der Öffnungsgrad des Ventils (2) bestimmbar ist.

2. Sensoreinrichtung (4) nach Anspruch 1, **dadurch gekennzeichnet, dass** zumindest ein Magnetfeldsensor (11), insbesondere Hall-Sensor, und zumindest ein mit dem zumindest einen Magnetfeldsensor (11) interagierender Permanentmagnet (12) vorgesehen sind, wobei der zumindest eine Permanentmagnet (12) in und/oder an einem gegenüber der Bedieneinrichtung (3) unbewegbaren Armaturgehäuse (5) und der zumindest eine Magnetfeldsensor (11) in und/oder an der Bedieneinrichtung (3) anordenbar ist, oder wobei der zumindest eine Magnetfeldsensor (11) in und/oder an dem Armaturgehäuse (5) und der zumindest eine Permanentmagnet (12) in und/oder an der Bedieneinrichtung (3) anordenbar ist, derart, dass in einem angeordneten Zustand bei einem Betätigen der Bedieneinrichtung (3) durch den zumindest einen Magnetfeldsensor (11) zumindest ein Abstandssignal, welches einer Abstandsänderung zwischen dem zumindest einen Permanentmagnet (12) und einem des zumindest einen Magnetfeldsensors (11) zuordenbar ist, erfassbar ist, wobei basierend auf dem zumindest einen Abstandssignal der bestimmte Öffnungsgrad überprüfbar und ggf. korrigierbar ist.

3. Sensoreinrichtung (4) nach Anspruch 1 oder 2, **dadurch gekennzeichnet, dass** zumindest ein an der Armatur (1), insbesondere der Bedieneinrichtung (3), anordenbarer Beschleunigungssensor (13) zum Erfassen eines Neigungswinkels der Armatur (1) vorgesehen ist, vorzugsweise wobei durch den zumindest einen Beschleunigungssensor (13) im angeordneten Zustand eine Beschleunigung in zumindest einer Richtung (14a, 14b) erfassbar ist,
und/oder dass eine in und/oder an der Armatur (1) anordenbare Auswerteeinrichtung, insbesondere zum Verarbeiten von Signalen des zumindest einen Drehratensensors (10) und/oder des zumindest einen Magnetfeldsensors (11) und/oder des zumindest einen Beschleunigungssensors (13), vorgesehen ist.

4. Sensoreinrichtung (4) nach einem der Ansprüche 1 bis 3, **dadurch gekennzeichnet, dass** der zumindest eine Drehratensensor (10) und/oder der zumindest eine Magnetfeldsensor (11) und/oder der zumindest eine Permanentmagnet (12) und/oder die Auswerteeinrichtung und/oder der zumindest eine Beschleunigungssensor (13) als eine zusammengefügte, insbesondere ringförmige, Elektronikeinrichtung (15) mit einem Trägerelement (16) ausgebildet sind,
vorzugsweise wobei zumindest ein Teil der Komponenten (10, 11, 12, 13) der Elektronikeinrichtung (15) durch eine stoffschlüssige Verbindung, insbesondere eine Kleb-, Löt- oder Schweißverbindung, und/oder eine form- und/oder kraftschlüssige Verbindung, insbesondere eine geschraubte und/oder geklemmte Verbindung, an und/oder in dem Trägerelement (16) festgelegt sind.

5. Sensoreinrichtung (4) nach Anspruch 4, **dadurch gekennzeichnet, dass** das Trägerelement (16) durch eine stoffschlüssige Verbindung, insbesondere eine Kleb-, Löt- oder Schweißverbindung, an und/oder in der Bedieneinrichtung (3) festlegbar ist oder dass das Trägerelement (16) durch eine form- und/oder kraftschlüssige Verbindung, insbesondere eine geschraubte und/oder geklemmte Verbindung oder eine Schrumpfverbindung, an und/oder in der Bedieneinrichtung (3) festlegbar ist.

6. Sensoreinrichtung (4) nach einem der Ansprüche 2 bis 5, **dadurch gekennzeichnet, dass** der zumindest eine Magnetfeldsensor (11) als 3D-Magnetfeldsensor ausgebildet ist
und/oder dass der zumindest eine Magnetfeldsensor (11) bezogen auf die Drehachse (9) exzentrisch anordenbar ist, insbesondere wobei der zumindest eine Magnetfeldsensor (11) ausgebildet ist, eine in einer Bewegungsebene (18) des zumindest einen Magnetfeldsensors (11) liegende X- und Y-Komponente (19a, 19b) des Magnetfelds (17) zu erfassen.

7. Sensoreinrichtung (4) nach einem der Ansprüche 1 bis 6, **dadurch gekennzeichnet, dass** der zumindest eine Drehratensensor (10) ausgebildet ist, bei einem Nicht-Betätigen der Bedieneinrichtung (3) inaktiv zu sein,
und/oder dass der zumindest eine Drehratensensor (10) und/oder der zumindest eine Beschleunigungssensor (13) und/oder der Magnetfeldsensor (11) dazu ausgebildet sind, sich bei Erfassen eines Signalwerts ober- oder unterhalb eines definierbaren Schwellsignalwerts von einem Ruhezustand in einen Aktivzustand zu versetzen und vorzugsweise ein nachfolgend erfasstes Signal, insbesondere Bewegungssignal, an die Auswerteeinrichtung zu übermitteln.

8. Sensoreinrichtung (4) nach einem der Ansprüche 3 bis 7, **dadurch gekennzeichnet, dass** die Auswerteeinrichtung eine Batterie zur Energieversorgung aufweist
und/oder dass die Auswerteeinrichtung ein Kommunikationsmittel, beispielsweise NFC, Bluetooth, RFID oder dergleichen, aufweist.

9. Sensoreinrichtung (4) nach einem der Ansprüche 1 bis 8, **dadurch gekennzeichnet, dass** der zumindest eine Drehratensensor (10) und/oder der zumindest eine Magnetfeldsensor (11) und/oder der zumindest eine Permanentmagnet (12) und/oder der zumindest eine Beschleunigungssensor (13) auf einer gleichen Höhe oder auf unterschiedlichen Höhen, insbesondere in Richtung einer Erstreckungsrichtung der Spindel (7) zueinander beabstandet, anordenbar sind.

10. Armatur (1), insbesondere Hydrant, mit einem Ventil (2), einer Bedieneinrichtung (3) für das Ventil (2) und einer Sensoreinrichtung (4) gemäß einem der Ansprüche 1 bis 9.

11. Verfahren zum Bestimmen eines Öffnungsgrads eines Ventils (2) einer Armatur (1), insbesondere eines Hydranten, mit einer Sensoreinrichtung (4), insbesondere einer Sensoreinrichtung (4) gemäß einem der Ansprüche 1 bis 9, wobei die Sensoreinrichtung (4) zumindest einen Drehratensensor (10), beispielsweise Gyroskop-Sensor, umfasst,
wobei die Armatur (1) eine zwischen einer Geschlossen-Position und einer Offen-Position, um eine Drehachse (9) drehbare Bedieneinrichtung (3), insbesondere umfassend eine drehbare Spindel (7), für das Ventil (2) aufweist,
wobei der zumindest eine Drehratensensor (10) in und/oder an der Bedieneinrichtung (3) angeordnet ist, umfassend die Schritte:
- Betätigen der Bedieneinrichtung (3) durch Drehen um die Drehachse (9);
- Erfassen zumindest eines Bewegungssignals durch den zumindest einen Drehratensensor (10); und
- Bestimmen des Öffnungsgrads des Ventils (2) basierend auf dem erfassten zumindest einen Bewegungssignal.

12. Verfahren nach Anspruch 11, **dadurch gekennzeichnet, dass** beim Bestimmen des Öffnungsgrads basierend auf dem zumindest einen erfassten Bewegungssignal ein Winkelgeschwindigkeits-Zeit-Verlauf bestimmt wird, wobei basierend auf dem Winkelgeschwindigkeits-Zeit-Verlauf zumindest ein Positions-Zeit-Wert der Bedieneinrichtung (3) bestimmt wird, wobei basierend auf dem zumindest einen Positions-Zeit-Wert und einem bekannten initialen Positions-Zeit-Wert ein mit dem Öffnungsgrad korrespondierender Bewegungsweg und/oder eine mit dem Öffnungsgrad korrespondierende Bewegungsrichtung der Bedieneinrichtung (3) bestimmt werden, insbesondere wobei der initiale Positions-Zeit-Wert der Geschlossen- oder der Offen-Position zugeordnet ist.

13. Verfahren nach Anspruch 11 oder 12, **dadurch gekennzeichnet, dass** die Sensoreinrichtung (4) zumindest einen Magnetfeldsensor (11) und zumindest einen mit dem zumindest einen Magnetfeldsensor (11) interagierenden Permanentmagnet (12) umfasst, wobei der zumindest eine Permanentmagnet (12) in und/oder an einem gegenüber der Bedieneinrichtung (3) unbewegbaren Armaturgehäuse (5) und der zumindest eine Magnetfeldsensor (11) in und/oder an der Bedieneinrichtung (3) angeordnet ist, oder wobei der zumindest eine Magnetfeldsensor (11) in und/oder an dem Armaturgehäuse (5) und der zumindest eine Permanentmagnet (12) in und/oder an der Bedieneinrichtung (3) angeordnet ist,
umfassend die weiteren Schritte:
- Erfassen zumindest eines Abstandssignals, welches einer Abstandsänderung zwischen dem zumindest einen Permanentmagnet (12) und einem des zumindest einen Magnetfeldsensors (11) zuordenbar ist, durch den zumindest einen Magnetfeldsensor (11); und
- Überprüfen und ggf. Korrigieren des Öffnungsgrads des Ventils (2) basierend auf dem erfassten zumindest einen Abstandssignal.

14. Verfahren nach einem der Ansprüche 11 bis 13, **dadurch gekennzeichnet, dass** durch einen an der Armatur (1), insbesondere der Bedieneinrichtung (3), angeordneten zumindest einen Beschleunigungssensor (13) ein aktueller Beschleunigungsvektor ermittelt wird und dass basierend auf einem bekannten initialen Beschleunigungsvektor und dem aktuellen Beschleunigungsvektor ein aktueller Neigungswinkel der Armatur (1) bestimmt wird.

15. Verfahren nach einem der Ansprüche 12 bis 14, **dadurch gekennzeichnet, dass** der Öffnungsgrad aus dem Verhältnis des bestimmten Bewegungswegs zu einem bekannten maximalen Bewegungsweg berechnet wird, insbesondere wobei der maximale Bewegungsweg der Offen-Position zugeordnet ist.
